# EUROPÄISCHE PATENTSCHRIFT

(11) **EP 3 668 758 B1**
(45) Veröffentlichungstag und Bekanntmachung des Hinweises auf die Patenterteilung: **21.10.2020**
(21) Anmeldenummer: 18753139.7
(22) Anmeldetag: 07.08.2018
(51) Int. Cl.: B60R 19/18

(54) **STOSSFÄNGERQUERTRÄGER**
BUMPER CROSS-MEMBER
TRAVERSE DE PARE-CHOCS

(30) Priorität: 14.08.2017 DE 102017118514
(43) Veröffentlichungstag der Anmeldung: 24.06.2020
(73) Patentinhaber: Kirchhoff Automotive Deutschland GmbH, 57439 Attendorn (DE)
(72) Erfinder: GÜNTHER, Alexander, 57462 Olpe (DE); TÖLLER, Marco, 51107 Köln (DE); SCHMITT, Maria, 57439 Attendorn (DE)
(74) Vertreter: Haverkamp, Jens
(86) Internationale Anmeldenummer: PCT/EP2018/071410
(87) Internationale Veröffentlichungsnummer: WO 2019/034483

(56) Entgegenhaltungen:
- DE-A1- 10 226 756
- DE-A1-102010 055 094
- FR-A1- 2 916 723
- US-A1- 2017 088 074

## Beschreibung

Die Erfindung betrifft einen Stoßfängerquerträger für ein Fahrzeugmit den Merkmalen des Oberbegriffs des Anspruchs 1.

Zum Schutze der Sicherheitszelle eines Fahrzeuges sowie von davor befindlicher Aggregate, wie etwa dem Motor, dem Kühler und dergleichen sind Kraftfahrzeuge mit einer Stoßfängeranordnung im Bereich des Vorderwagens ausgerüstet. Eine solche Stoßfängeranordnung umfasst einen Stoßfängerquerträger, der sich über die Breite des Fahrzeuges erstreckt und an Längsträgerbauteile des Fahrzeuges angeschlossen ist. Bei diesen Längsträgerbauteilen kann es sich um so genannte Crashboxen handeln, die bei Überschreiten einer bestimmten Aufprallenergie diese durch plastische Deformation absorbieren. Zur Fahrzeugaußenseite hin ist ein solcher Stoßfängerquerträger typischerweise durch eine Verkleidungsschale aus Kunststoff verkleidet.

Der Anschluss eines solchen Stoßfängerquerträgers an die in den Seitenbereichen eines Fahrzeuges angeordneten Längsträger bildet einen Hauptlastpfad zur Absorption kinetischer Energie im Falle eines Aufpralls. Bestrebungen, Fahrzeuge kollisionskompatibel auszulegen, haben zur Folge, dass Aufprallenergie über eine größere vertikale Erstreckung (z-Fahrzeugrichtung) absorbiert werden muss. Die größere vertikale Erstreckung derartiger Stoßfängerquerträger soll die Kollisionskompatibilität zwischen unterschiedlichen Fahrzeugen verbessern. Zu diesem Zweck sind Crashmanagementsysteme entwickelt worden, die neben einem Hauptlastpfad über ein oder zwei in vertikaler Richtung davon beabstandete Nebenlastpfade verfügen. Über diese wird ebenfalls Energie absorbiert, und zwar je nach Auslegung in einer Ebene unterhalb und/oder oberhalb des Hauptlastpfades. Um der Forderung einer besseren Kollisionskompatibilität zwischen unterschiedlichen Fahrzeugen gerecht zu werden, kann jedem Lastpfad ein eigener Stoßfängerquerträger zugeordnet sein. Diese sind mit einem Abstand zueinander angeordnet. Eine solche Auslegung eines kollisionskompatiblen Stoßfängerquerträger bzw. einer solchen Anordnung ist bei solchen Fahrzeugen erforderlich, bei denen zur Luftanströmung beispielsweise von Kühlern im Vorderwagen sich nicht ein einziger Stoßfängerquerträger über die gesamte zu überbrückende Höhe erstrecken kann.

Die Sekundärlastpfade sind typischerweise durch Längsträgerteile mit einer geringeren Querschnittsfläche als die Längsträgerteile des Hauptlastpfades bereitgestellt. Daher sind die einen solchen Sekundärlastpfad bildenden Längsträgerteile bereits mit einer geringeren Kraft deformierbar und damit nachgiebiger. Es wäre jedoch wünschenswert, wenn die Nachgiebigkeit einer solchen Stoßfängeranordnung über die Höhe derselben möglichst homogen wäre.

DE 10 2010 055 094 A1 offenbart einen Stoßfängerquerträger mit den Merkmalen des Oberbegriffs des Anspruchs 1. Dieser Stoßfängerquerträger weist eine Schale auf, die durch ein Schließblech verschlossen ist. Dieser Stand der Technik befasst sich mit einer verbesserten Aufnahme von Aufprallenergie, was dadurch erreicht wird, dass der Stoßfängerquerträger in Längserstreckung mehrere Abschnitte aufweist, die in ihrem mittleren Bereich in Bezug auf die Höhe desselben geöffnet sind. Die Wandungen in den Durchzügen sind horizontal verlaufen und stehen zur Aufnahme von Unfallenergie zur Verfügung.

Ausgehend von dem diskutierten Stand der Technik liegt der Erfindung die Aufgabe zugrunde, einen Stoßfängerquerträger der eingangs genannten Art, dergestalt weiterzubilden, dass mit diesem nicht nur auch über eine größere Höhe eine Krafteinleitung in den oder die Lastpfade vereinheitlich ist, sondern auch eine Luftanströmung von hinter dem Stoßfängerquerträger angeordneten Aggregaten, wie beispielsweise einem Kühler dennoch möglich ist.

Gelöst wird diese Aufgabe erfindungsgemäß durch einen eingangs genannten, gattungsgemäßen Stoßfängerquerträger mit den Merkmalen des Anspruchs 1.
Bei den im Rahmen dieser Ausführungen verwendeten Richtungen - der x-Richtung, der y-Richtung und der z-Richtung - handelt es sich um die Koordinatenrichtungen eines Fahrzeuges, wobei die x-Richtung der Längserstreckung, die y-Richtung der Erstreckung in Seitenrichtung und die z-Richtung die Vertikalerstreckung (Hochachse) des Fahrzeuges ist. Dieses Koordinatensystem wird auf die Beschreibung des Stoßfängerquerträgers in gleicher Weise angewandt.

Der im Rahmen dieser Ausführungen benutzte Begriff "Durchzug" umfasst sämtliche in den Stoßfängerquerträger eingebrachte Öffnungen, gleich welcher Art, die den Stoßfängerquerträger in Fahrtrichtung und somit in x-Richtung durchgreifen. Hierbei kann es sich beispielsweise um Öffnungen mit einer in den Stoßfängerquerträger hinein erstreckenden umlaufenden Wand handeln. Ebenso besteht die Möglichkeit, dass die beiden Schalen miteinander fluchtende Öffnungen ohne einen angeformten Kragen oder eine angeformte Wand aufweisen, welche Öffnungen beispielsweise durch Lasern, Fräsen oder dergleichen in die jeweilige Schale eingebracht sind.

Der erfindungsgemäße Stoßfängerquerträger ist in seiner vertikalen Erstreckung und somit in seiner z-Richtung in unterschiedliche Abschnitte gegliedert. Ein erster und ein zweiter Abschnitt sind als in Querrichtung (y-Richtung) durchgängige Hohlkammerabschnitte ausgeführt. Zwischen diesen beiden Hohlkammerabschnitten befindet sich ein Durchzugsabschnitt. Dieser ist gekennzeichnet durch zumindest einen den Stoßfängerquerträger in x-Richtung durchgreifenden Durchzug. Dieser Durchzug gewährleistet eine Luftdurchströmbarkeit, sodass ein oder mehrere, hinter dem Stoßfängerquerträger befindliche Fahrzeugaggregate, wie beispielsweise ein Kühler, insbesondere wenn unmittelbar hinter dem Durchzug angeordnet, Fahrtluft angeströmt sind. Von Besonderheit ist, dass der wenigstens eine Durchzug als Versteifungsstruktur zugleich zum Versteifen zumindest einer der beiden Schalen des Stoßfängerquerträgers ausgeführt sein kann. Erreicht wird dieses dadurch, dass der wenigstens eine Durchzug in wenigstens einer der beiden Schalen durch einen mit einem Übergangsradius an die Flachseite der Schale in Richtung zu der anderen Schale hin angeformten, umlaufenden Wandabschnitt eingefasst ist. Bei einer Ausbildung des Stoßfängerquerträgers, der aus zwei Schalen zusammengesetzt ist, bilden die in y-Richtung benachbart zu einem solchen Durchzug angeordneten Abschnitte des Durchzugabschnittes mit den beiden in z-Richtung benachbarten Hohlkammerabschnitten eine gemeinsame Hohlkammer aus. Durch diese Abschnitte sind die beiden durch den Durchzugsabschnitt voneinander beabstandeten Hohlkammerabschnitte verbunden, die sodann Brücken zwischen diesen Hohlkammerabschnitten innerhalb des Durchzugsabschnitts darstellen. Eine solche Hohlkammer erstreckt sich daher über die gesamte Höhe des Stoßfängerquerträgers.

In einer bevorzugten Ausgestaltung ist vorgesehen, dass der Durchzug durch eine solche Ausbildung des zumindest einen Durchzuges in beiden Schalen bereitgestellt ist. Ein solcher Stoßfängerquerträger kann aufgrund seines Durchzugsabschnittes somit auch mit einer Luft anzuströmende Aggregate überdeckende Höhe ausgelegt sein, ohne diese Aggregate gegenüber der notwendigen Luftanströmung abzuschatten. Der zumindest eine als Versteifungsstruktur eingebrachte Durchzug trägt zusammen mit den benachbarten Hohlkammerabschnitten des Durchzugabschnittes zur Versteifung auch gegenüber Torsionsbeanspruchungen und gegenüber außermittigen Beanspruchungen in Bezug auf die Höhe des Stoßfängerquerträgers bei. Ist der Stoßfängerquerträger nur über einen Hauptlastpfad an das Fahrzeug angebunden, ist die vorbeschriebene Ausgestaltung desselben dafür verantwortlich, dass auch die Energie eines Aufpralls in demjenigen Hohlkammerabschnitt, an den keine Längsträgerteile angeschlossen sind, in den Hauptlastpfad eingekoppelt wird, insbesondere ohne dass ein Abknicken des nicht an Längsträger angeschlossenen Hohlkammerabschnittes gegenüber dem an die Längsträger angeschlossenen Hohlkammerabschnitt zu befürchten wäre. Ein solcher Stoßfängerquerträger eignet sich aufgrund seiner Konzeption auch für ein Fahrzeugcrashmanagement, bei dem neben einem Hauptlastpfad zumindest ein Sekundärlastpfad vorgesehen ist. In einem solchen Fall ist das eine Hohlkammerprofil an die den Hauptlastpfad definierenden Längsträgerabschnitte angeschlossen, während das andere Hohlkammerprofil an Längsträgerabschnitte des Sekundärlastpfades angeschlossen ist. Ein solcher Sekundärlastpfad kann oberhalb und/oder auch unterhalb des Hauptlastpfades angeordnet sein. Die bereits vorstehend zu einer einheitlichen Krafteinleitung beschriebenen Vorteile dieses Stoßfängerquerträgers, wenn nur an einen Hauptlastpfad angeschlossen, stellen sich gleichermaßen ein, wenn der Stoßfängerquerträger auch an einen Sekundärpfad bereitstellende Längsträgerprofilteile angeschlossen ist und letztere bereits mit einer geringeren Energie plastisch deformiert werden können.

In einer Weiterbildung eines solchen Stoßfängerquerträgers ist vorgesehen, dass dieser neben seinem ersten Hohlkammerprofilabschnitt, der an Längsträger des Hauptlastpfades angeschlossen ist und seinem durch den Durchzugsabschnitt von diesem beabstandeten zweiten Hohlkammerabschnitt einen dritten Hohlkammerabschnitt aufweist, der von den ersten Hohlkammerabschnitt ebenfalls durch einen Durchzugsabschnitt beabstandet ist. In z-Richtung befindet sich bei einem solchen Stoßfängerquerträger somit der eine Hohlkammerabschnitt oberhalb des an die Längsträger des Hauptlastpfades angeschlossenen Hohlkammerabschnitts und ein anderer unterhalb von diesem, und zwar jeweils durch einen Durchzugsabschnitt von dem mittleren Hohlkammerabschnitt getrennt. Bei einer solchen Ausgestaltung können an jeden der beiden, jeweils durch einen Durchzugsabschnitt von dem ersten Hohlkammerabschnitt getrennten Hohlkammerabschnitte die Längsträger eines Sekundärlastpfades angeschlossen sein.

Zur Verbesserung der Versteifung der Durchzüge ist vorgesehen, dass der den wenigstens einen Durchzug einfassende Wandabschnitt zusammen mit seinem Übergangsradius zur flächigen Erstreckung der jeweiligen Schale insgesamt nach Art einer Verkröpfung und somit S-förmig im Querschnitt ausgeführt ist. Dieses ermöglicht, dass das freie Ende dieses Wandabschnittes flächig an der Innenseite der anderen Schale anliegen kann und die beiden Schalen somit auch in den Durchzügen miteinander, beispielsweise durch Fügen (Schweißen) miteinander verbunden werden können.

Der wenigstens eine Durchzug weist typischerweise eine Vorzugsrichtung auf, und zwar eine solche, die der Längserstreckung des Stoßfängerquerträgers folgt. Die Vorzugsrichtung verläuft somit in y-Richtung. Ein solcher Durchzug ist dann in aller Regel nach Art eines Langloches ausgeführt. Auch eine elliptische Ausbildung ist möglich. Wenn über die Breite des Stoßfängerquerträgers die Luft durchströmbare Querschnittsfläche im Durchzugsabschnitt möglichst groß gehalten werden soll, können beispielsweise zwei sich über eine relativ große Erstreckung in y-Richtung ausgelegte Durchzüge vorgesehen sein, die in der Mitte des Stoßfängerquerträgers voneinander getrennt sind. Die Durchzüge enden mit Abstand zu den Endabschlüssen des Stoßfängerquerträgers. Bei einer solchen Ausgestaltung verfügt der Stoßfängerquerträger somit über drei Brückenabschnitte, in denen dieser mit seinen beiden Hohlkammerabschnitten in z-Richtung eine gemeinsame Hohlkammer ausbildet. In einer anderen Ausgestaltung, bei der die Querschnittsfläche der Durchzüge ebenfalls besonders hoch ist, sind in dem Durchzugsabschnitt ein mittiger Durchzug und zwei seitlich dazu angeordnete und von dem mittigen Durchzug beabstandete Durchzüge vorgesehen. In dieser Ausgestaltung verfügt der Stoßfängerquerträger über vier Abschnitte, in denen dieser über seine Vertikalerstreckung eine durchgängige Hohlkammer aufweist.

Die Vertikalerstreckung und auch die Horizontalerstreckung der Hohlkammern eines solchen Stoßfängerquerträgers kann unterschiedlich ausgeführt sein. Typischerweise weist der Hohlkammerprofilabschnitt, an den der Hauptlastpfad angeschlossen ist, eine größere vertikale Erstreckung auf als der zumindest eine weitere, davon durch einen Durchzugsabschnitt getrennte Hohlkammerabschnitt.

Die Enden des Stoßfängerquerträgers können geschlossen ausgeführt sein. Auch endseitig offene Ausgestaltungen sind möglich.

Nachfolgend ist die Erfindung anhand eines Ausführungsbeispiels unter Bezugnahme auf die beigefügten Figuren beschrieben. Es zeigen:

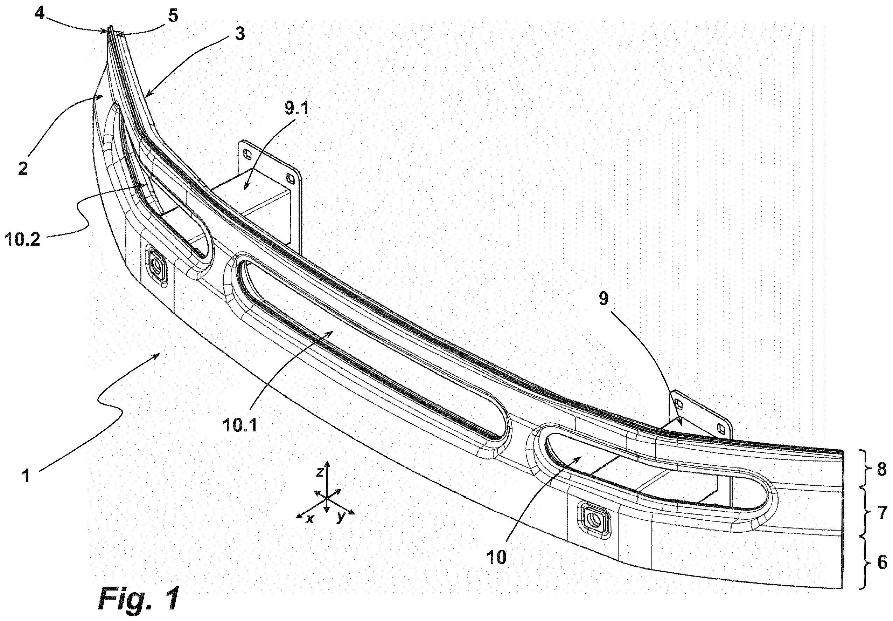

- **Fig. 1:**: Eine perspektivische Darstellung eines erfindungsgemäßen Stoßfängerquerträgers mit daran angeschlossenen Crashboxen,
- **Fig. 2:**: eine Frontansicht des Stoßfängerquerträgers der Figur 1,
- **Fig. 3:**: einen Schnitt entlang der Linie A-B des Stoßfängerquerträgers der Figur 2 und
- **Fig. 4:**: einen Schnitt entlang der Linie C-D des Stoßfängerquerträgers der Figur 2.

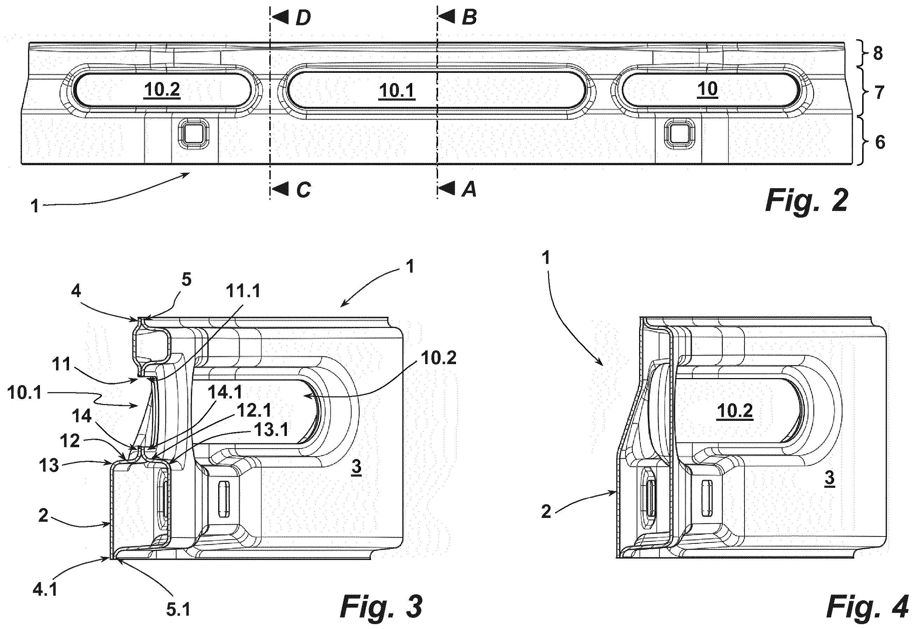

Ein Stoßfängerquerträger 1 ist aus zwei Schalen zusammengesetzt, und zwar einer äußeren Schale 2 und einer inneren Schale 3. Bei dem dargestellten Ausführungsbeispiel handelt es sich bei beiden Schalen 2, 3 um umgeformte Aluminiumblechbauteile. Beide Schalen 2, 3 verfügen oberseitig und unterseitig über flächig aneinander liegende Verbindungsflansche 4, 5; 4.1, 5.1, an denen die beiden Schalen 2, 3 miteinander durch einen Schweißprozess miteinander verbunden sind (siehe auch Figur 3). Die beiden Schalen 2, 3 schließen einen Querträgerhohlraum ein.

Der Stoßfängerquerträger 1 des dargestellten Ausführungsbeispiels ist in vertikaler Richtung (z-Richtung) in drei Abschnitte gegliedert. Der unterste Abschnitt 6 ist durch einen Hohlkammerabschnitt 6 bereitgestellt. Dieser Abschnitt ist als sich über die Längserstreckung des Stoßfängerquerträgers 1 und somit in y-Richtung durchgängige Hohlkammer ausgeführt. Oberhalb dieses Hohlkammerabschnittes 6 befindet sich ein Durchzugsabschnitt 7, der wiederum von einem weiteren Hohlkammerabschnitt 8 in z-Richtung gefolgt wird. Der Hohlkammerabschnitt 8 ist ebenso aufgebaut wie der Hohlkammerabschnitt 6, weist jedoch eine geringere vertikale Erstreckung auf. Bei dem dargestellten Ausführungsbeispiel ist der untere Hohlkammerabschnitt 6 mit einer größeren Höhe ausgeführt, da dieser ausgelegt ist, um an Längsträgerteile - im dargestellten Ausführungsbeispiel Crashboxen 9, 9.1 - angeschlossen zu werden. Die Crashboxen 9, 9.1 sind mit einer Verbindungsplatte an fahrzeugseitige Längsträger (nicht dargestellt) anzuschließen.

Der Durchzugsabschnitt 7 ist prinzipiell ebenfalls als Hohlkammer ausgeführt, wobei die sich in y-Richtung erstreckende Hohlkammer durch Vorsehen von Durchzügen 10, 10.1, 10.2 unterbrochen ist. Die Durchzüge 10, 10.1, 10.2 dienen zum Durchlassen von Fahrtwind. Hinter den Durchzügen 10, 10.1, 10.2 können sich fahrzeugseitige Aggregate, die luftangeströmt sein sollen, wie beispielsweise ein Kühler oder dergleichen befinden. Zugleich können die Durchzüge 10, 10.1, 10.2 auch genutzt werden, um fahrzeugseitig dahinter angeordnete Vorrichtungen, etwa Crashboxen oder auch dem Motor zugehörige Aggregate leichter montieren zu können. Bei dem dargestellten Ausführungsbeispiel sind die Durchzüge 10, 10.1, 10.2 jeweils durch eine entsprechende Umformung in beiden Schalen 2, 3 bereitgestellt. Die Durchzüge 10, 10.1, 10.2 sind langlochartig ausgeführt und weisen eine Vorzugsrichtung auf, die in y-Richtung des Stoßfängerquerträgers 1 weist. Bei dem dargestellten Ausführungsbeispiel nehmen die Durchzüge 10, 10.1, 10.2 eine Länge von etwa 80 % der Längserstreckung des Durchzugsabschnitts 7 ein (siehe Figur 2). Der Aufbau des Stoßfängerquerträgers 1 ist nachstehend in Bezug auf die Ausbildung der Durchzüge 10, 10.1, 10.2 anhand der Schnittdarstellungen der Figuren 3 und 4 beschrieben.

In der Querschnittdarstellung der Figur 3 ist der Stoßfängerquerträger 1 in einer Schnittdarstellung im Bereich des Durchzuges 10.1 gezeigt. Zur Ausbildung des Durchzuges 10.1 - gleiches gilt für die Ausbildung der Durchzüge 10, 10.2 - ist jede Schale 2, 3 entsprechend umgeformt. Im Bereich des Durchzuges 10.1 weist jede Schale 2, 3 einen die eigentliche Durchzugsöffnung 11 bezüglich der Schale 2 und 11.1 bezüglich der Schale 3 umlaufend einfassenden und von dem außenseitigen Abschluss in Richtung zu der jeweils anderen Schale 3 bzw. 2 abgestellten Wandabschnitt 12, 12.1 auf. Jeder Wandabschnitt 12, 12.1 ist mit einem Übergangsradiusabschnitt 13, 13.1 an die nach außen weisende Flachseite der jeweiligen Schale 2, 3 angeformt. Bei dem dargestellten Ausführungsbeispiel sind die umlaufenden Wandabschnitte 12, 12.1 mit ihrem jeweiligen Übergangsradiusabschnitt 13, 13.1 insgesamt nach Art einer Verkröpfung und somit S-förmig ausgeführt. Auf diese Weise ist jeweils ein in Richtung der Durchzugsöffnung 11, 11.1 jeder Schale 2, 3 ragender, umlaufender Verbindungsflansch 14, 14.1 an jeder Schale 2, 3 ausgebildet. Die Verbindungsflansche 14, 14.1 liegen flächig aneinander. Die Verbindungsflansche 14, 14.1 sind ebenso wie die Verbindungsflansche 4, 5; 4.1, 5.1 miteinander durch einen Schweißprozess verbunden. Durch diese Maßnahme sind die beiden Schalen 2, 3 des Stoßfängerquerträgers 1 nicht nur wie herkömmliche Stoßfängerquerträger im Bereich ihres oberen und unteren Abschlusses miteinander verbunden, sondern auch in den Durchzugseinfassungen. Dieses verleiht dem Stoßfängerquerträger 1 eine besondere Stabilität und Steifigkeit, da hierdurch Relativbewegungen der beiden Schalen 2, 3 gegeneinander blockiert sind. Zudem tragen maßgeblich zur Aussteifung des Stoßfängerquerträgers die an die Flachseiten der Schalen 2, 3 nach innen abgekanteten umlaufenden Wandabschnitte 12, 12.1 bei. Die Fügeverbindung zwischen den beiden Schalen 2, 3 kann als durchgängige Schweißnaht ausgeführt sein. Ebenfalls ist es möglich, die Schweißnaht durch eine Reihe von Punktschweißungen oder als Steppnaht auszuführen. Aufgrund des flächigen Aneinanderliegens der Verbindungsflansche 4, 5; 4.1, 5.1; 14, 14.1 können die beiden Schalen 2, 3 ganz oder teilweise auch miteinander verklebt oder anderweitig miteinander gefügt sein.

Damit der Stoßfängerquerträger 1 über seine gesamte Frontfläche einheitlich (global) auf einen Aufprall reagiert, sind die in y-Richtung benachbart zu den Durchzügen 10, 10.1, 10.2 befindlichen Abschnitte des Durchzugsabschnittes 7 als sich über die gesamte Höhe (z-Richtung) des Stoßfängerquerträgers erstreckende Hohlkammern ausgebildet, wie dieses in der Schnittdarstellung der Figur 4 gezeigt ist. Somit bilden die Hohlkammerabschnitte 6, 8 in diesen Zwischendurchzugsbereichen mit dem Durchzugsabschnitt 7 eine gemeinsame Hohlkammer aus. Durch diese die Hohlkammerabschnitte 6, 8 über den Durchzugsabschnitt 7 verbindende Hohlkammern bzw. die diese einfassenden Schalenbereiche ist ein einheitliches Verhalten des Stoßfängerquerträgers 1 auch bei einem Aufprall nur auf den Hohlkammerabschnitt 6 oder den Hohlkammerabschnitt 8 und somit ein einheitliches Einleiten der zu absorbierenden Kraft in die Crashboxen 9, 9.1 gewährleistet.

In den Figuren 3 und 4 ist die Crashbox 9.1 der Übersicht halber nicht gezeigt.

Ein Stoßfängerquerträger gemäß der Erfindung kann sowohl fahrzeugfrontseitig als auch fahrzeugheckseitig eingesetzt werden.

Bei dem in den Figuren dargestellten Ausführungsbeispiel sind die beiden Schalen 2, 3 als Aluminiumbauteile ausgeführt. Ein Stoßfängerquerträger gemäß der Erfindung kann genauso gut auch aus Schalen anderen Materials, beispielsweise als Stahlblechbauteile oder auch aus Verbundwerkstoffen hergestellt sein. Ebenso ist es möglich, dass die beiden Schalen materialunterschiedlich sind.

### Bezugszeichenliste

- 1: Stoßfängerquerträger
- 2: Äußere Schale
- 3: Innere Schale
- 4,4.1: Verbindungsflansch
- 5, 5.1: Verbindungsflansch
- 6: Hohlkammerabschnitt
- 7: Durchzugsabschnitt
- 8: Hohlkammerabschnitt
- 9, 9.1: Crashbox
- 10. 10.1, 10.2: Durchzug
- 11, 11.1: Durchzugsöffnung
- 12, 12.1: Wandabschnitt
- 13, 13.1: Übergangsradiusabschnitt
- 14, 14.1: Verbindungsflansch

## Patentansprüche

1. Stoßfängerquerträger für ein Fahrzeug, welcher Stoßfängerquerträger (1) aus einer äußeren Schale (2) und einer an die äußere Schale (2) angeschlossene inneren Schale (3) zusammengesetzt ist und ferner einen Durchzugsabschnitt (7) aufweist, der wenigstens einen, den Stoßfängerquerträger (1) in x-Richtung durchgreifenden Durchzug (10, 10.1, 10.2) umfasst, wobei der Stoßfängerquerträger (1) in seiner z-Richtung in wenigstens drei Abschnitte (6, 7, 8) gegliedert ist, von denen ein erster und ein zweiter Hohlkammerabschnitt (6, 8) durch den zwischen diesen befindlichen Durchzugsabschnitt (7) getrennt sind, wobei die in y-Richtung zu dem wenigstens einen Durchzug (10, 10.1, 10.2) benachbarten Abschnitte des Durchzugabschnittes (7) mit den in z-Richtung benachbarten Hohlkammerabschnitten (6, 8) eine gemeinsame Hohlkammer bilden, **dadurch gekennzeichnet, dass** der Durchzug (10, 10.1, 10.2) in wenigstens einer der beiden Schalen (2, 3) durch einen mit einem Übergangsradiusabschnitt (13, 13.1) an die Flachseite der Schale (2, 3) in Richtung zu der anderen Schale (3, 2) angeformten umlaufenden Wandabschnitt (12, 12.1) eingefasst ist, dass der Wandabschnitt (12, 12.1) mit seinem Übergangsradius (13, 13.1) S-förmig ausgeführt ist und der wenigstens eine Durchzug (10, 10.1, 10.2) in beiden Schalen (2, 3) des Stoßfängerquerträgers (1) einen solchen Wandabschnitt (12, 12.1) aufweist und dass der erste Hohlkammerabschnitt (6) eine größere Erstreckung in z-Richtung aufweist als der zweite Hohlkammerabschnitt (8) und der erste Hohlkammerabschnitt (6) Anschlusspunkte zum Anschließen von jeweils einem Längsträgerteil aufweist.

2. Stoßfängerquerträger nach Anspruch 1, **dadurch gekennzeichnet, dass** die den Durchzug (10, 10.1, 10.2) einfassenden freien Endabschnitte der Wandabschnitte (12, 12.1) flächig aneinander liegen.

3. Stoßfängerquerträger nach Anspruch 1 oder 2, **dadurch gekennzeichnet, dass** der wenigstens eine Durchzug (10, 10.1, 10.2) eine der Längserstreckung des Stoßfängerquerträgers (1) folgende Vorzugsrichtung aufweist.

4. Stoßfängerquerträger nach Anspruch 3, **dadurch gekennzeichnet, dass** der Stoßfängerquerträger (1) in seinem Durchzugsabschnitt (7) einen mittig angeordneten Durchzug (10.1) und zwei seitlich hierzu angeordnete Durchzüge (10, 10.2) aufweist.

5. Stoßfängerquerträger nach einem der Ansprüche 1 bis 4, **dadurch gekennzeichnet, dass** die Anschlusspunkte zum Anschließen jeweils eines Crashelementes (9, 9.1) ausgelegt sind.

6. Stoßfängerquerträger nach Anspruch 1 oder 5, **dadurch gekennzeichnet, dass** der erste Hohlkammerabschnitt (6) der untere Hohlkammerabschnitt des Stoßfängerquerträgers (1) ist.

7. Stoßfängerquerträger nach Anspruch 1 oder 5, **dadurch gekennzeichnet, dass** der erste Hohlkammerabschnitt der obere Hohlkammerabschnitt des Stoßfängerquerträgers ist.

8. Stoßfängerquerträger nach Anspruch 1 oder 5, **dadurch gekennzeichnet, dass** der Stoßfängerquerträger einen dritten, durch einen weiteren Durchzugsabschnitt von dem ersten Hohlkammerabschnitt beabstandeten Hohlkammerabschnitt umfasst.

## Claims

1. Bumper cross-member for a vehicle, which bumper cross-member (1) is composed of an outer shell (2) and an inner shell (3) connected to an outer shell (2), and also having a cut-out portion (7), which comprises at least one cut-out (10, 10.1, 10.2) passing through the bumper cross-member (1) in the x-direction, wherein the bumper cross-member (1) is subdivided in its z-direction into at least three portions (6, 7, 8), of which a first and a second hollow chamber portion (6, 8) are separated by a cut-out portion (7) located between them, wherein the portions of the cut-out portion (7) adjacent in the y-direction to the at least one cut-out (10, 10.1, 10.2) form a common hollow chamber with the hollow chamber portions (6, 8) adjacent in the z-direction, **characterised in that** the cut-out (10, 10.1, 10.2) is enclosed in at least one of the two shells (2, 3) by a circumferential wall portion (12, 12.1) with a transitional radius portion (13, 13.1) formed at the flat side of the shell (2, 3) in the direction towards the other shell (3, 2), that the wall portion (12, 12.1) is configured with its transitional radius (13, 13.1) in an S-shape, and the at least one cut-out (10, 10.1, 10.2) comprises in both shells (2, 3) of the bumper cross-member (1) such a wall portion (12, 12.1), and that the first hollow chamber portion (6) has a greater extension in the z-direction than the second hollow chamber portion (8), and the first hollow chamber portion (6) comprises connection points for the connection in each case of a longitudinal carrier part.

2. Bumper cross-member according to claim 1, **characterised in that** the free end sections of the wall portions (12, 12.1) which enclose the cut-out (10, 10.1, 10.2) are in surface contact with one another.

3. Bumper cross-member according to claim 1 or 2, **characterised in that** the at least one cut-out (10, 10.1, 10.2) exhibits a preferred direction which follows the longitudinal extension of the bumper cross-member (1).

4. Bumper cross-member according to claim 3, **characterised in that** the bumper cross-member (1) has in its cut-out portion (7) a centrally arranged cut-out (10.1) and, arranged laterally to this, two cut-outs (10, 10.2).

5. Bumper cross-member according to any one of claims 1 to 4, **characterised in that** the connection points are configured such as to connect in each case a crash element (9, 9.1).

6. Bumper cross-member according to claim 1 or 5, **characterised in that** the first hollow chamber portion (6) is the lower chamber portion of the bumper cross-member (1).

7. Bumper cross-member according to claim 1 or 5, **characterised in that** the first hollow chamber portion is the upper hollow chamber portion of the bumper cross-member.

8. Bumper cross-member according to claim 1 or 5, **characterised in that** the bumper cross-member comprises a third hollow chamber portion, spaced at a distance apart from the first hollow chamber portion by a further cut-out portion.

## Revendications

1. Traverse de pare-chocs pour un véhicule, laquelle traverse de pare-chocs (1) est composée d'une coque extérieure (2) et d'une coque intérieure (3) raccordée à la coque extérieure (2) et qui présente par ailleurs un tronçon à passage d'air (7), lequel comprend au moins un passage d'air (10, 10.1, 10.2) traversant dans le sens x la traverse de pare-chocs (1), la traverse de pare-chocs (1) étant subdivisée dans son sens z en au moins trois tronçons (6, 7, 8), dont un premier et un second tronçon à âme creuse (6, 8) séparés par un tronçon à passage d'air (7) se trouvant entre eux, les tronçons du tronçon à passage d'air (7) au voisinage, dans le sens y, d'au moins un passage d'air (10, 10.1, 10.2) formant, avec les tronçons à âme creuse (6, 8) voisins dans le sens z, un âme creuse commune, **caractérisée en ce que** le passage d'air (10, 10.1, 10.2) est serti dans au moins une des deux coques (2, 3) par un tronçon de paroi (12, 12.1) périphérique moulé par un tronçon à rayon de transition (13, 13.1) au côté plan de la coque (2, 3) en direction de l'autre coque (3, 2), **en ce que** le tronçon de paroi (12, 12.1) est conformé avec son rayon de transition (13, 13.1) en forme de S et **en ce que** l'au moins un passage d'air (10, 10.1, 10.2) dans les deux coques de la traverse de pare-chocs (1) présente un tel tronçon de paroi (12, 12.1) et **en ce que** le premier tronçon à âme creuse (6) présente une étendue plus grande dans le sens z que le second tronçon à âme creuse (8) et le premier tronçon à âme creuse (6) présente des points de raccordement afin de raccorder respectivement une pièce de traverse.

2. Traverse de pare-chocs selon la revendication 1, **caractérisée en ce que** les tronçons d'extrémité libres des tronçons de paroi (12, 12.1) qui sertissent le passage d'air (10, 10.1, 10.2) sont situés l'un à côté de l'autre sur un même plan.

3. Traverse de pare-chocs selon la revendication 1 ou 2, **caractérisée en ce que** l'au moins un passage d'air (10, 10.1, 10.2) présente une orientation privilégiée qui suit l'étendue longitudinale de la traverse de pare-chocs (1).

4. Traverse de pare-chocs selon la revendication 3, **caractérisée en ce que** la traverse de pare-chocs (1) présente dans son tronçon à passage d'air (7) un passage d'air (10.1) disposé au centre et deux passages d'air (10, 10.2) disposés latéralement à celui-ci.

5. Traverse de pare-chocs selon l'une des revendications 1 à 4, **caractérisée en ce que** les points de raccordement sont conçus pour raccorder respectivement un élément de crash (9, 9.1).

6. Traverse de pare-chocs selon la revendication 1 ou 5, **caractérisée en ce que** le premier tronçon à âme creuse (6) est le tronçon inférieur à âme creuse de la traverse de pare-chocs (1).

7. Traverse de pare-chocs selon la revendication 1 ou 5, **caractérisée en ce que** le premier tronçon à âme creuse est le tronçon supérieur à âme creuse de la traverse de pare-chocs.

8. Traverse de pare-chocs selon la revendication 1 ou 5, **caractérisée en ce que** la traverse de pare-chocs comporte un troisième tronçon à âme creuse éloigné du premier tronçon à âme creuse par un tronçon supplémentaire à passage d'air.
